(19) **Europäisches Patentamt**

**European Patent Office**

**Office européen des brevets**

(11) **EP 4 546 831 B1**

(12) **EUROPEAN PATENT SPECIFICATION**

(45) Date of publication and mention
of the grant of the patent:
**10.06.2026  Bulletin 2026/24**

(21) Application number: **23205550.9**

(22) Date of filing: **24.10.2023**

(51) International Patent Classification (IPC):
**H04W 4/90** *(2018.01)*        **H04W 4/029** *(2018.01)*
**H04W 12/68** *(2021.01)*        **H04W 76/50** *(2018.01)*
**G06F 3/01** *(2006.01)*

(52) Cooperative Patent Classification (CPC):
**H04W 4/90; G06F 3/017; H04W 4/029;**
**H04W 12/68; H04W 76/50**

(54) **METHOD AND SYSTEM FOR EXPOSING MALICIOUS MOBILE ACTIVITY BY EXPLOITING SIGNAL-BASED GESTURES**

VERFAHREN UND SYSTEM ZUR EXPOSITION BÖSARTIGER MOBILER AKTIVITÄT DURCH AUSNUTZUNG SIGNALBASIERTER GESTEN

PROCÉDÉ ET SYSTÈME D'EXPOSITION D'UNE ACTIVITÉ MOBILE MALVEILLANTE PAR EXPLOITATION DE GESTES BASÉS SUR UN SIGNAL

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**30.04.2025  Bulletin 2025/18**

(73) Proprietor: **Unify Beteiligungsverwaltung GmbH & Co. KG**
**81739 München (DE)**

(72) Inventors:
• **Tsiatsikas, Zisis**
**55534 Thessaloniki (GR)**

• **Kehr, Manfred**
**81371 Munich (DE)**
• **Lederer, Thomas**
**82211 Herrsching (DE)**
• **Hutton, Andrew**
**Nottingham, NG9 5ET (GB)**

(74) Representative: **Schaafhausen, Anne**
**Schaafhausen Patentanwälte PartGmbB**
**Prinzregentenplatz 15**
**81675 München (DE)**

(56) References cited:
**WO-A1-2016/191497        WO-A1-2017/106775**
**US-A1- 2022 036 721        US-A1- 2023 195 866**
**US-B2- 10 764 769**

## Description

The present invention relates to a method and a system for exposing malicious mobile activity by exploiting signal-based gestures. Thereby, an emergency service detects an emergency incident in an area and communicates with one or more user(s) of a mobile end device in the incident area and instructing the one or more user(s) to perform a gesture with their end device(s). Then the signal and/or location data of the one or more user end device(s) in the incident area are analyzed and verify the one or more user(s) in the incident area as non-malicious or malicious actors.

One of the most serious problems in the telecom industry concerns the detection and prevention of robocalls. The latter correspond to automated calls associated usually with telemarketing content which are on the rise since the last years. These types of calls are most often triggered by malicious entities which try to mislead their victims.

This gets even worse if considered the case of emergency calls. In such cases each call is important, and thus, it is very crucial to eliminate the risk of consuming resources on the side of an emergency service, for example, on part of a public safety answering point (PSAP) without there being a real emergency incident. This is different from the traditional case of Telephony Denial of Service Attacks (TDoS) as the malicious actor usually tries to be as silent as possible without raising the alarms of the underlying security mechanisms. The aim of the robocall is to make the victim believe that on the other side of the line there is a real person. Therefore, the present invention is based on the object to provide a method and a corresponding system for exposing malicious mobile activity by exploiting signal-based gestures. All in all, the present invention is devoted to a method and a system which analyzes a (mobile) device signal data to infer if a person needs help in the case of an emergency incident or even to expose a robocall.

This object is solved by a method having the features according to claim 1 and a system having the features of claim 11. Preferred embodiments of the invention are defined in the respective dependent claims.

According to the invention, a method for exposing malicious mobile activity by exploiting signal-based gestures is provided, the method comprising the steps of:

- detecting, by an emergency service, an emergency incident in an area;
- communicating, by the emergency service, with one or more user(s) end device(s) in the incident area and instructing one or more user(s) to perform a first gesture with the one or more user(s) end device(s) in the air;
- receiving upon request, by the emergency service, signal and/or location data from a carrier regarding the one or more user(s) end device(s) for a predetermined amount of time;

- analyzing, by the emergency service, the signal and/or location data received by the carrier to identify if the positioning data inferred from the signal analysis provide enough information to recognize the first gesture which was performed by the one or more user(s) end device(s) in the incident area;
- communicating, by the emergency service, with one or more user(s) in the incident area to perform a second or any further gesture by moving the one or more user(s) end device(s) in the air, if the signal analysis does not offer enough information to recognize the first gesture, and performing again the steps of receiving and analyzing signal and/or location data in regard to the second or any further gesture;
- verifying, by the emergency service, the one or more user(s) in the incident area as non-malicious and proceeding with standard emergency handling, if the signal analysis provides enough information to recognize the first gesture, the second or any further gesture.

The present invention builds over the concept of high position accuracy which are possible with the new standards (e. g. 5G, 6G, etc.). Using these data, the invention can identify the position and the motion of the device equipment in order to recognize specific gestures performed in the air by using the signal data of a device retrieved from the carrier (provider). These wireless standards will offer the flexibility to track the position changes far more accurate than this is done today. More specifically, it is expected that the wireless technology will reach a high accuracy in the level of in meter range and less.

Relying on these findings, a method is proposed on which the underlying service will analyze only the signal data of a device to identify if a user has formed a requested gesture. In the proposed method, there is not a need to establish a data communication channel with the user in order to retrieve position data from the device. It is possible to directly ping the provider to provide the positioning data and perform calculations over the data set of position points.

It should be noted that the proposed method can be used as one of the steps of a multilayer security solution that will tackle robocalls. This is considered a "sine qua non", as a person may not be in position to perform a specific movement by holding the device. This may happen because a person is impaired, or because there is a very critical emergency situation on which the user cannot move, say, for example, after a car accident. This is always related to other sources of information that can be used to verify the environment, e. g. sensors indicate that there is a car accident, etc. On the other, it is expected that in most of the cases a simple motion of the device will be possible, so this covers the majority of the use cases.

This invention relies on known methods to calculate the user equipment (UE) or user device positioning data from signal data that have been retrieved from the provider. UE is a term used in wireless communications (e. g. LTE, 4G, 5G or 6G and higher) to describe a mobile device, such as a smartphone, tablet, laptop, or any other type of wireless device that is used to access a network. This is done using methods like the Uplink Time Difference of Arrival (UTDOA or U-TDOA) or Enhanced Observed Time Difference (EOTD or E-OTD). EOTD is a method for locating mobile terminals in GSM (Global System for Mobile Communications) networks. It is often more accurate than the Cell-ID method but requires complex additional installations in the network and a certain minimum density of base stations. Position determination can achieve an accuracy of up to 25 m.

Usually position determination takes place in the following steps. First, the terminal determines the differences in signal propagation times between its own location and at least two neighboring base stations. This is done by observing the arrival times of normal bursts; special signals are not required for this. In parallel, special hardware in the network, the LMU (Location Measurement Unit), measures the propagation time differences of the same signals. The delay differences determined by the mobile station are then transmitted to the LMU which can calculate an approximate position from the mobile station's measurements and its own measurements.

In Universal Mobile Telecommunications System (UMTS)-based systems, the corresponding system is called Observed Time Difference of Arrival (OTDOA). The UTDOA method increases the positioning accuracy to a value better than 100 meters. As the name "uplink" suggests, it is the UMTS base stations that record and evaluate the location signal of the mobile device. In some countries like the USA, UTDOA is a possible method of transmitting positions in emergencies.

The present invention can make use of such above-mentioned methods in order to prove that the data are enough to infer the requested shape with, for example, a pointnet etc., but in any case, the proposed method could directly exploit the three-dimensional positioning data of each UE that have been computed in the provider. According to Qi, C. R., Su, H., Mo, K., & Guibas, L. J. (2017), Pointnet: Deep learning on point sets for 3d classification and segmentation. In Proceedings of the IEEE conference on computer vision and pattern recognition from pages 652 - 660 (https://arxiv.org/pdf/1612.00593.pdf), a pointnet solution provides a unified architecture for applications ranging from object classification, part segmentation, to scene semantic parsing. It directly takes point clouds as input and outputs either class labels for the entire input or per point segment/part labels for each point of the input.

As described in in the art, the sounding reference signal (SRS) is considered the uplink signal which is transmitted by a UE and received by a Base Station (BS) for uplink sounding purposes. Using the values of this signal or a set of values from different versions of this signal it is possible to localize a UE in the 3D axis. It is stressed that UTDOA is just an example of a method that could be used for the purpose of verifying the signal-based gesture performed by a UE. Other similar methods can be used in the future as well. More specifically, methods which are also based on SRS but avoiding the timing synchronization costs. Taking into account SRS provided by MATLAB software already offers a way to calculate simulation values. Similar values should be requested from the carrier in specific time frames in order to use them in the proposed method.

Optionally, the method could request from the provider the values depicted in the following equation:

$$Y=A(\theta,\phi)S(\tau)+N$$

where value Y holds the azimuth A, elevation angle $\theta,\phi$ and delay information $S(\tau)$ plus N the relevant noise created in the channel. A different approach would be to request from the provider the vectorized value of Y.

As already mentioned, another example would be to request the positioning data in the 3 axis directly from the provider.

Taking into account the present invention may use data provided as described above. With such a set of signal data collected from the provider, a set of 3D points is calculated. For example, such a set of data can be processed by a method described in Qi, C. R., Su, H., Mo, K., & Guibas, L. J. (2017), Pointnet: Deep learning on point sets for 3d classification and segmentation. In Proceedings of the IEEE conference on computer vision and pattern recognition from pages 652 - 660 (https://arxiv.org/pdf/1612.00593.pdf) in order to deduce the shape-gesture that was requested from the user.

According to a preferred embodiment, communication in the step of communicating, by the emergency service, with one or more user(s) end device(s) in the incident area and instructing the one or more user(s) to perform the first gesture with their end device(s) in the air comprises Short Message Service-Cell Broadcast, CB-SMS, non-interactive SMS, or voice commands from the Interactive voice response (IVR) or the agent, in case the user has an active call with the emergency service.

According to another preferred embodiment, communication in the step of communicating, by the emergency service, with one or more user(s) end device(s) in the incident area and instructing the one or more user(s) to perform the second or any further gesture with their end device(s) in the air comprises Short Message Service-Point to Point (SMS-PP), interactive SMS, interactive data channel, or voice commands from the IVR or the agent, in case the user has an active call with the emergency service.

Further, according to a preferred embodiment, the signal/location data in the step of receiving upon request, by the emergency service, signal and/or location data from a carrier regarding the one or more user(s) end device(s) comprises sounding reference signal (SRS), Uplink Time Difference of Arrival (UTDOA), Enhanced Observed Time Difference (EOTD), location by value (LbV), Advanced Mobile Location (AML).

According to yet another preferred embodiment, the communication further comprises a link to open a web page that presents a CAPTCHA puzzle with suggested second and/or any further gestures to be performed by the one or more user(s).

According to yet another preferred embodiment, in the communication step, the method further comprises instructing, by the emergency service, the one or more user(s) to perform a secret gesture which is known only by verified user(s) in the corresponding area of the emergency incident.

According to yet another preferred embodiment, in the step receiving upon request, by the emergency service, signal and/or location data from a carrier regarding the one or more user(s) end device(s) further comprises a predetermined amount of time of 10 seconds, preferably of 5 seconds and most preferably of 3 seconds.

According to yet another preferred embodiment, the method further comprises recognizing, by the emergency service, the first, second or any further gesture which was performed by the one or more user(s) end device(s) in the incident area with a similarity of at least 50 percent, preferably of at least 80 precent, and most preferably of at least 90 percent.

According to yet another preferred embodiment, the method comprises further setting a predetermined timer value in which the one or more user(s) have to perform the first, second or any further gesture, wherein the predetermined timer value is 60 seconds, preferably 20 seconds and most preferably 10 seconds.

According to yet another preferred embodiment, communication in the step of communicating, by the emergency service, with one or more user(s) end device(s) in the incident area and instructing the one or more user(s) to perform a second or any further gesture with their end device(s) in the air comprises instructing the one or more user(s) to choose a gesture to be performed by presenting the user a CAPTCHA puzzle with different gestures to choose.

According to the invention, a system for exposing malicious mobile activity by exploiting signal-based gestures is provided, wherein the system is configured to perform the steps of the method according to any one of the claims 1 - 10.

According to a preferred embodiment, the system comprises a bot, an artificial intelligence, a computer program, an application and/or a communication network with a link to obtain the requested data from the provider, wherein these are configured to support the emergency service to perform the steps of the method.

According to yet another aspect of the present invention, a computer-program element is provided, which when being executed by a processor is adapted to carry out steps of the method for exposing malicious mobile activity by exploiting signal-based gestures.

According to another aspect of the present invention, a computer-readable medium comprising program code is provided, which when being executed by a processor is adapted to carry out steps of the method for exposing malicious mobile activity by exploiting signal-based gestures.

A computer-readable medium may be a floppy disk, a hard disk, a USB (Universal Serial Bus) storage device, a RAM (Random Access Memory), a ROM (read only memory) or an EPROM (Erasable Programmable Read Only Memory). A computer-readable medium may also be a data communication network, e. g. the Internet, which may allow downloading a program code.

It has also to be noted that aspects of the invention have been described with reference to different subject-matters. In particular, some aspects or embodiments have been described with reference to apparatus/system type claims whereas other aspects have been described with reference to method type claims. However, a person skilled in the art will gather from the above and the following description that, unless otherwise notified, in addition to any combination between features belonging to one type of subject-matter also any combination between features relating to different types of subject-matters is considered to be disclosed with this text. In particular, combinations between features relating to the apparatus/system type claims and features relating to the method type claims are considered to be disclosed.

Further, any embodiments or otherwise described features of the present invention are combinable in any manner by a person skilled in the art unless otherwise explicitly described. The invention and embodiments thereof will be described below in further detail in connection with the drawing(s).

Fig. 1 shows a schematic illustration of a block diagram of the method according to an embodiment of the invention.

Fig. 2 shows a flowchart for the case where the method is to monitor victims in an affected emergency incident area according to another embodiment of the invention.

Fig. 3 shows a flowchart for the case where the method is to verify if an abandoned call comprises fake geolocation data according to another embodiment of the invention.

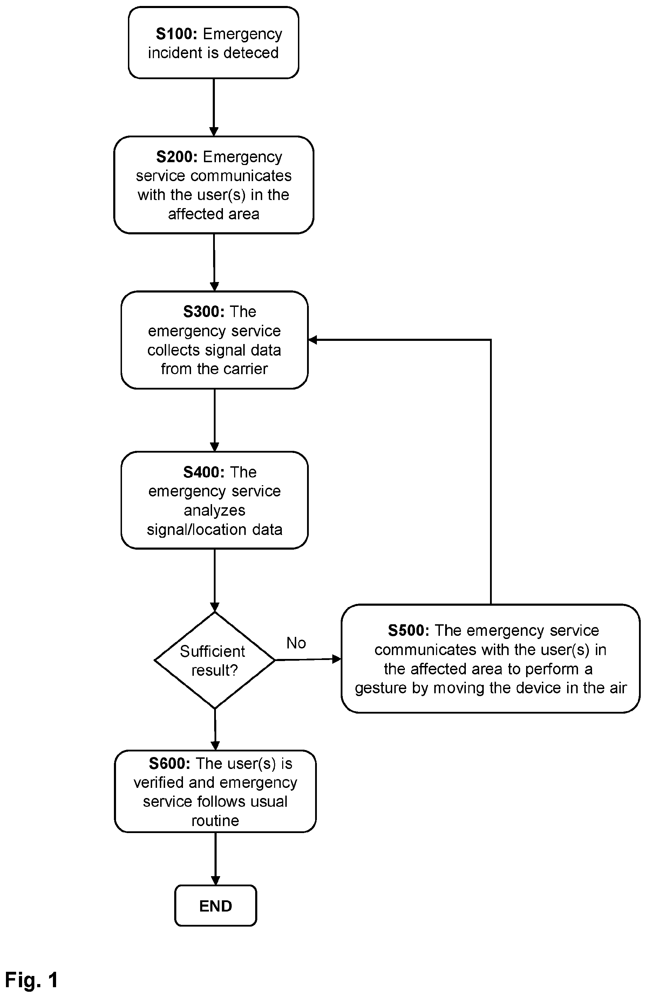

**Fig. 1** schematically shows in block diagram steps of the method according to one embodiment of the invention. In the first step S100, the emergency services detect an incident. In terms of the invention, emergency services and rescue services are organizations that ensure public safety, security, and health by addressing and resolving different emergencies. Some of these agencies exist solely for addressing certain types of emergencies, while others deal with ad hoc emergencies as part of their normal responsibilities. Many of these agencies engage in community awareness and prevention programs to help the public avoid, detect, and report emergencies effectively. Emergency services are often considered first responders, and typically have dedicated emergency vehicles.

Emergency services have one or more dedicated emergency telephone numbers reserved for critical emergency calls. In many countries, one number is used for all of the emergency services (e. g. 911 in the Americas, 999 in the United Kingdom, 112 in continental Europe, 000 in Australia). Calls made to emergency services to report emergencies are called emergency calls.

This detection of an incident can be done either with a call that arrives at the call center, or with other sources like, for example, social media. In any case, the incident affected area is known to the emergency service.

In the second step S200, the call center (e. g. via bot) of the emergency service communicates with the user(s) in the affected area and instructing the user(s) to perform a first gesture in the air with their end device(s). In this step, if a call has been received by the emergency service, the agents of the call center follow the normal process. Still, there may be a need that the emergency service communicates a Short Message Service-Cell Broadcast (CB-SMS or SMS-CB) to all the recipients of the affected area, by instructing them to prove if they are safe, affected, etc.

Cell Broadcast (CB) is a method of sending messages to multiple mobile device users in a defined area at the same time. It is defined by the ETSI's (European Telecommunications Standards Institutes) GSM committee and 3GPP (3rd Generation Partnership Project) and is part of the 2G, 3G, 4G LTE (telecommunication) and 5G standards. It is also known as CB-SMS. Unlike Short Message Service-Point to Point (SMS-PP), Cell Broadcast is a one-to-many geo-targeted and geo-fenced messaging service.

In this case, based on one option of the method, the emergency service can send a CB-SMS that will instruct the users to move their devices in the air in order to prove that they are safe. A more specific or generic gesture could be requested, depending on the condition of the emergency incident.

In step S300, the emergency service requests data from the carrier (provider) regarding the examined device(s) for the last 120 to 180 seconds. These data can be used in order to identify a set of historical gestures that have been performed by this user the last x minutes.

In step S400 the emergency service analyzes the signal data to identify if the positioning data inferred from the signal analysis provide enough information to recognize the first gesture which was performed by the one or more user(s) end device(s) in the incident area. If the analysis of the data does not offer a useful result, say, for example, the classification of the first gesture with at least 80 percent similarity, this can be used to take other decisions with regards to the gesture that the user will be instructed to do.

In this respect, in step 500, the emergency service requests from all or specific users to perform a specific second gesture to prove that they are safe. This extra gesture can be used in other cases as well. For example, in case that the emergency service receives an emergency call with location information, i. e., location by value (LbV), in the SIP INVITE request, generated from the device, then the method can be used in order to verify the location information and possibly to expose malicious behavior of a device or a set of devices.

Different ways can be used to contact the user(s) in the affected area. For example, in case it is an abandoned call, the call center (e. g. a bot) can send a second gesture instruction using an SMS.

In a different case, the active voice stream can be used to direct the user. Further, a CAPTCHA solution can be deployed with the aim to offer the user the possibility to select a specific first and/or second gesture. For example, based on conditions in the step S300, the emergency service (e. g. bot) receives useful data regarding the device. In such a case, the data analysis can indicate that this device has performed 3 different first gestures in the at least last 120 - 180 seconds (e. g. the gestures correspond to a circle, a rectangle, and a triangle). Holding in mind that even the data analysis does not indicate something, the emergency service (e. g. bot) can select a number of random shapes, say the most common shapes (e. g. circle, triangle, etc.) as second gesture to be performed.

Using these data, in step S500, the emergency service (e.g. bot) sends a CAPTCHA puzzle to the device using an interactive SMS, or any other interactive data channel, using the three previous first gestures. Keep in mind that the aforementioned solution can be applied both in the case where the call is abandoned or active. The user selects the gesture that he/she wants to perform, and the interactive SMS mechanism sends back to the emergency service (e. g. bot) the response. In case the classification identifies different gestures performed by the user, for example, gestures g1, g2, or g3, compared to the requested gesture g0, then the emergency service (e.g. bot) can use those gestures in a later step, say using an interactive SMS mechanism, so that it can be proposed to the user to perform one of the gestures g1, g2, or g3. This is done because the user was requested to perform a specific gesture and failed. This could be the result of an accident and the positioning of the user. Thus, it would be better to propose to the user to perform one of the gestures g1, g2, or g3 instead of g0. With this approach, it can be assumed that the second time the performed gesture will be validated with at least 80% similarity. This response can also be used in order to get the user consent about the second gesture that will be performed. In essence step S500 is used as an additional verification step for the user choices.

By executing again in step S300, the emergency service (e. g. bot) will send a request to the carrier in order to retrieve data related to the examined device. With the analysis of these data (repeated step S400) the emergency service (e. g. bot) can identify if the user has moved the device in the requested way. This can be done using specific timers so that it can be avoided that the user will wait too long for the system to decide. If the process consumes more than 120 seconds, the proposed method will terminate, and other security mechanisms will need to verify the caller.

In the step S400 (repeated), the emergency service (e. g. bot) analyzes the data and infers that the device has formed the second gesture with at least a similarity of at least 80 percent, identifying the user of this device as non-malicious.

In the final step S600, the emergency service (e. g. bot) verifies that one or more user(s) in the incident area are non-malicious and proceeds with standard emergency handling, if the signal analysis provides enough information to recognize the first gesture, the second or any further gesture. Otherwise, the steps S500, S300 and S400 can be repeated, or other further security mechanisms can take place to specify the UE as either robocalls or as real human persons. In case the provider cannot provide signal data but only position data points for the last k seconds, it is inferred that the second shape (gesture) is based on these points. In this case, signal data are not used but applied directly in the location data provided by the carrier.

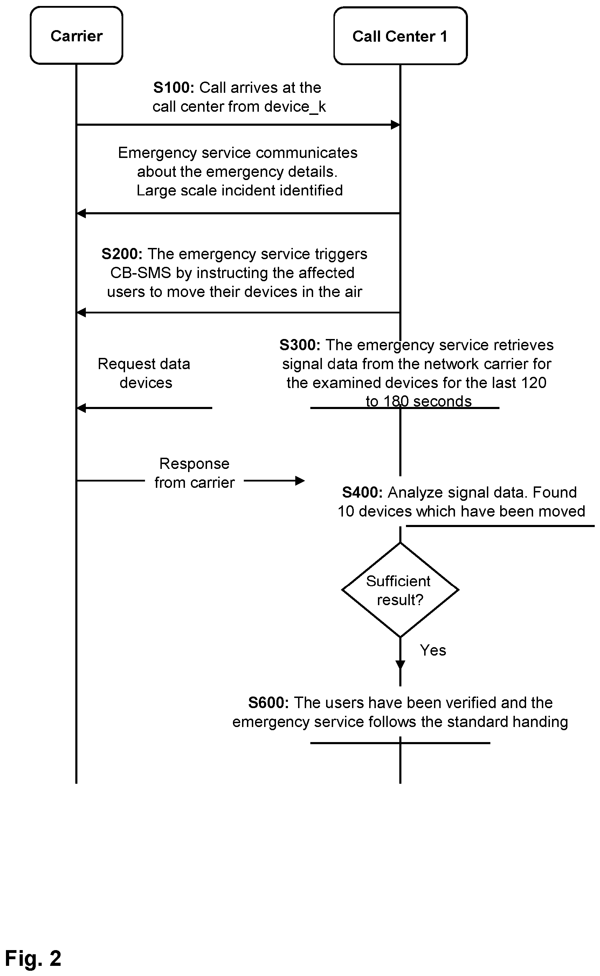

Fig. 2 shows a flowchart for the case where the method is to monitor victims in an affected emergency incident area. In this flowchart, the situation is described where a caller (in Fig. 2 associated with device_k) has an active audio/text/video call with the call center. In this case, the emergency service receives the information that a large-scale incident affects an area from an incoming call at step S100. In case of a large-scale emergency incident that affects a big area, like, for example, a wildfire, an earthquake, etc. or an area where many people are involved, like a pile up with various cars, etc., respective emergency service can send a CB-SMS which directs the users to move their devices in a specific way, so that the emergency service can identify which of them may need help, or infer which of them may be victims (see step S200 in Fig. 2). So, an easy way to check approximately how many people may be affected is to trigger a CB-SMS from the emergency service to the users in this area. The users are instructed with the SMS to move their devices in the air and perform a first gesture.

The emergency service sends a request to the provider or carrier in order to receive signal data for the devices in the affected area for the last 120 to 180 seconds of activity (depicted as step S300 in Fig. 2).

The service analyzes the data and identifies that there are 10 users moving their device indicating that everything is fine (S400). In case of these 10 devices which have been moved, the emergency service follows its standard handling (S600). The rest of the found devices where no movement was detected will be prioritized by the emergency service, meaning the emergency service sends forces first to these specific users that have not been moved or that have not moved their device. Or in a different way, the emergency service picks or focuses first on those devices which have not moved at all. This could be a sign that people are affected by the incident, may be unconscious, etc.

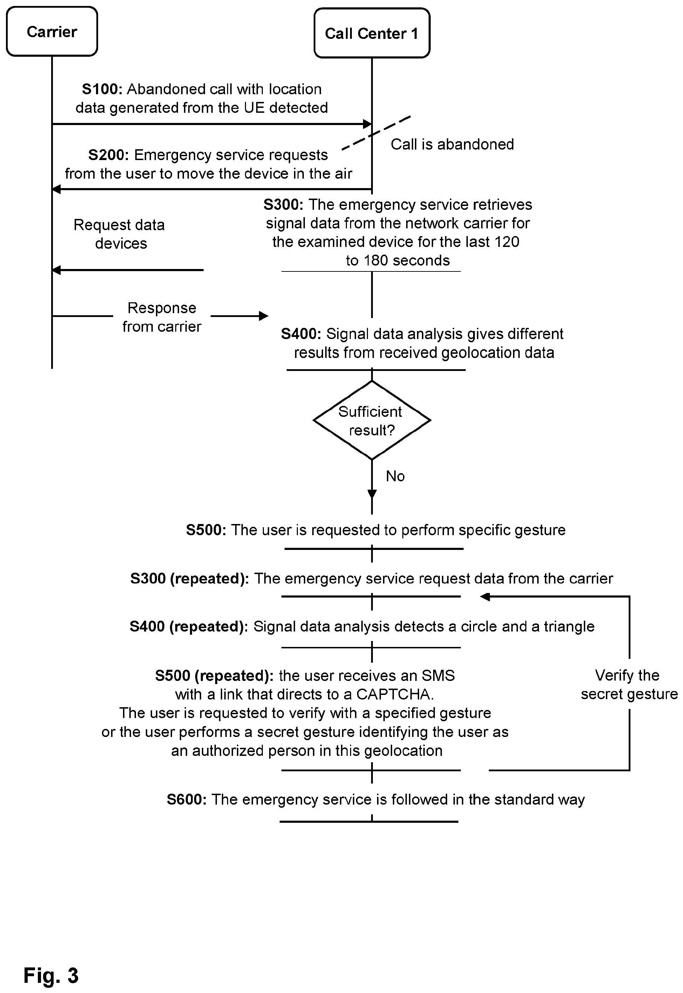

Fig. 3 shows a flowchart for the case where the method is to verify if an abandoned call comprises fake geolocation data indicating that such a call might be an unwanted robocall. In this situation, a call is received with location information, for example, in the SIP body or via Advanced Mobile Location (AML) sent by the UE and is abandoned (see Fig. 3, step S100). Advanced Mobile Location (AML) is a free-of-charge emergency location-based service (LBS) available on smartphones that, when a caller dials the local (in country) short dial emergency telephone number, sends the best available geolocation of the caller to a dedicated endpoint, usually a public safety answering point (PSAP), making the location of the caller available to emergency call takers in real-time. AML improves the time taken by emergency call takers to verify the location of callers and can improve the time taken to dispatch an emergency response. AML is a protocol to transport data with SMS and/or HTTPS from the phone to the emergency call center in all countries that have deployed AML. AML is not an application and does not require any action from the caller. AML is supported in many countries, and by all smartphones running recent versions of Android or iOS, although it can be disabled in user settings.

The emergency service follows the same steps as described in the previous embodiment in Fig. 2, but in step S200 it sends only a non-interactive SMS which instructs the user(s) to move the device(s) in the air. This non-interactive SMS can be a single SMS which requests from the user(s) to perform the gesture. After 60 seconds in step S300, the emergency service (e. g. in form of a bot) sends a request to the carrier in order to get a fresh set of data related to the devices. In step S400, the emergency service performs an analysis which does not show the expected results regarding the device because the location data received in the abandoned call do not match the signal data with respect to the location of the user, in particular the user's device. In step S500, the emergency service instructs the user to perform a specific second gesture.

The emergency service receives again fresh data from the carrier upon requesting it (repeated step S300). After analyzing these data (repeated step S400), the emergency service identifies however two different gestures that have been performed by the device in the last 60 seconds. For example, a circle gesture and a triangle gesture.

The emergency service wants to further investigate this, so in step S500 (repeated), it sends now an interactive SMS to the user with a link. The user needs to click on the link in order to open a web page that presents a CAPTCHA puzzle. The CAPTCHA presents two figures, e. g. a circle and a triangle (inferred from the data collected from repeated step S300). The user is requested to select one of these provided gestures. After the user verifies which gesture he/she would like to perform, he/she moves the device in the air in this specific way, in order to form this specified gesture.

Optionally, the emergency services can instruct the user to perform a secret gesture. The shape corresponds to a secret gesture which is known only by verified people in the corresponding geolocation, say, for example, the security personnel of a building. In this indirect way, the emergency service will be able not only to classify the motion of a mobile device as human activity, but also to authorize the holder of the device which performed a secret gesture.

Again, step S300 is repeated, the emergency service sends a request to the carrier in order to receive update information related to device. This is done in order to receive a fresh set of data related to the device so as to deduce if the user has performed the gesture that has been requested. In repeated step S400, the emergency service analyzes the data and identifies if the gesture has been performed with at least 80 percent similarity.

Then in the last step S600, if the gesture is verified, the emergency service (e. g. bot) connects the caller to the call taker of the call center or PSAP.

It should be noted that the term "comprising" does not exclude other elements or steps and the "a" or "an" does not exclude a plurality. Further, elements described in association with different embodiments may be combined.

It should also be noted that reference signs in the claims shall not be construed as limiting the scope of the claims.

Reference numerals

UE        User equipment
device_k   (mobile) device of a user

S100 - S600      method steps S100 - S600

**Claims**

1. A method for exposing malicious mobile activity by exploiting signal-based gestures, wherein the method comprising the steps of:

   - S100 detecting, by an emergency service, an emergency incident in an area;
   - S200 communicating, by the emergency service, with one or more user(s) end device(s) in the incident area and instructing one or more user(s) to perform a first gesture with the one or more user(s) end device(s) in the air;
   - S300 receiving upon request, by the emergency service, signal and/or location data from a carrier regarding the one or more user(s) end device(s) for a predetermined amount of time;
   - S400 analyzing, by the emergency service, the signal and/or location data received by the carrier to identify, if the positioning data inferred from the signal analysis provide enough information to recognize the first gesture which was performed by the one or more user(s) end device(s) in the incident area;
   - S500 communicating, by the emergency service, with one or more user(s) in the incident area to perform a second or any further gesture by moving the one or more user(s) end device(s) in the air, if the signal analysis does not offer enough information to recognize the first gesture, and performing again the steps of receiving and analyzing signal and/or location data in regard to the second or any further gesture;
   - S600 verifying, by the emergency service, the one or more user(s) in the incident area as nonmalicious and proceeding with standard emergency handling, if the signal analysis provides enough information to recognize the first gesture, the second or any further gesture.

2. The method according to claim 1, wherein communication in the step of communicating, by the emergency service, with one or more user(s) end device(s) in the incident area and instructing the one or more user(s) to perform the first gesture with their end device(s) in the air comprises Short Message Service-Cell Broadcast, CB-SMS, non-interactive SMS, and/or voice commands.

3. The method according to any one of the preceding claims, wherein communication in the step of communicating, by the emergency service, with one or more user(s) end device(s) in the incident area and instructing the one or more user(s) to perform the second or any further gesture with their end device(s) in the air comprises a Short Message Service-Point to Point (SMS-PP), an interactive SMS, an interactive data channel, and/or voice commands.

4. The method according to any one of the preceding claims, wherein the signal/location data in the step of receiving upon request, by the emergency service, signal and/or location data from a carrier regarding the one or more user(s) end device(s) comprises sounding reference signal, SRS, Uplink Time Difference of Arrival, UTDOA, Enhanced Observed Time Difference, EOTD, location by value, LbV, Advanced Mobile Location, AML.

5. The method according to any one of the preceding claims, wherein the communication further comprises a link to open a web page that presents a CAPTCHA puzzle with suggested second and/or any further gestures to be performed by the one or more user(s).

6. The method according to any one of the preceding claims, wherein in the communication step, the method further comprises instructing, by the emergency service, the one or more user(s) to perform a secret gesture which is known only by verified user(s) in the corresponding area of the emergency incident.

7. The method according to any one of the preceding claims, wherein in the step receiving upon request, by the emergency service, signal and/or location data from a carrier regarding the one or more user(s) end device(s) further comprises a predetermined amount of time of 10 seconds, preferably of 5 seconds and most preferably of 3 seconds.

8. The method according to any one of the preceding claims, wherein the method further comprises recognizing, by the emergency service, the first, second or any further gesture which was performed by the one or more user(s) end device(s) in the incident area with a similarity of at least 50 percent, preferably of at least 80 percent, and most preferably of at least 90 percent.

9. The method according to any one of the preceding claims, wherein the method comprises further setting a predetermined timer value in which the one or more user(s) have to perform the first, second or any further gesture, wherein the predetermined timer value is 60 seconds, preferably 20 seconds and most preferably 10 seconds.

10. The method according to any one of the preceding claims, wherein communication in the step of communicating, by the emergency service, with one or more user(s) end device(s) in the incident area and instructing the one or more user(s) to perform a second or any further gesture with their end device(s) in the air comprises instructing the one or more user(s) to choose a gesture to be performed by presenting the user a CAPTCHA puzzle with different gestures to choose.

11. A system for exposing malicious mobile activity by exploiting signal-based gestures, wherein the system is configured to perform the method according to any one of the claims 1 to 10.

12. The system according to claim 11, wherein the system comprising a bot, an artificial intelligence, a computer program, an application and/or a communication network with a link to obtain the requested data from the provider, wherein these are configured to support the emergency service to perform the steps of the method.

**Patentansprüche**

1. Verfahren zum Aufdecken böswilliger mobiler Aktivitäten durch Ausnutzung signalbasierter Gesten, wobei das Verfahren die folgenden Schritte umfasst:

   - S100 Erkennen, durch einen Notdienst, eines Notfalls in einem Gebiet;
   - S200 Kommunizieren, durch den Notdienst, mit einem oder mehreren Benutzerendgeräten im Notfallgebiet und Anweisung an einen oder mehrere Benutzer, eine erste Geste mit dem oder den Benutzerendgeräten in der Luft auszuführen;
   - S300 Empfangen, auf Anfrage, durch den Notdienst, von Signal- und/oder Standortdaten von einem Netzbetreiber bezüglich des oder der Benutzerendgeräte für einen vorbestimmten Zeitraum;
   - S400 Analysieren, durch den Notdienst, der vom Netzbetreiber empfangenen Signal- und/oder Standortdaten, um festzustellen, ob die aus der Signalanalyse abgeleiteten Positionsdaten ausreichende Informationen liefern, um die erste Geste zu erkennen, die von dem oder den Benutzerendgeräten im Notfallgebiet ausgeführt wurde;
   - S500 Kommunizieren, durch den Notdienst, mit einem oder mehreren Benutzern im Notfallgebiet, um eine zweite oder weitere Geste auszuführen, indem das oder die Benutzerendgerät(e) in der Luft bewegt wird/werden, wenn die Signalanalyse nicht genügend Informationen liefert, um die erste Geste zu erkennen, und erneute Durchführung der Schritte des Empfangens und Analysierens von Signal- und/oder Standortdaten in Bezug auf die zweite oder weitere Geste;
   - S600 Überprüfung, durch den Notdienst, dass der/die Benutzer im Notfallgebiet keine böswilligen Absichten haben, und Fortsetzung der standardmäßigen Notfallbehandlung, wenn die Signalanalyse genügend Informationen liefert, um die erste, die zweite oder weitere Gesten zu erkennen.

2. Verfahren nach Anspruch 1, wobei die Kommunikation in dem Schritt, in dem der Notdienst mit einem oder mehreren Benutzerendgeräten im Notfallgebiet kommuniziert und dem einen oder den mehreren Benutzern anweist, die erste Geste mit ihrem/ihren Endgerät(en) in der Luft auszuführen, einen Short Message Service-Cell Broadcast, CB-SMS, eine nicht-interaktive SMS und/oder Sprachbefehle umfasst.

3. Verfahren nach einem der vorhergehenden Ansprüche, wobei die Kommunikation in dem Schritt, in dem der Notdienst mit einem oder mehreren Benutzerendgeräten im Notfallgebiet kommuniziert und den einen oder mehreren Benutzern anweist, die zweite oder eine weitere Geste mit ihren Endgeräten in der Luft auszuführen, einen Short Message Service-Point to Point, SMS-PP, eine interaktive SMS, einen interaktiven Datenkanal und/oder Sprachbefehle umfasst.

4. Verfahren nach einem der vorhergehenden Ansprüche, wobei die Signal-/Standortdaten, in dem Schritt des Empfangens von Signal- und/oder Standortdaten von einem Netzbetreiber bezüglich des Endgeräts bzw. der Endgeräte eines oder mehrerer Nutzer auf Anfrage durch den Notdienst ein Signaltonreferenzsignal, SRS, Uplink-Zeitdifferenz, UTDOA, erweiterte beobachtete Zeitdifferenz, EOTD, Standort nach Wert, LbV und erweiterte Mobilortung, AML, umfassen.

5. Verfahren nach einem der vorhergehenden Ansprüche, wobei die Kommunikation ferner einen Link zum Öffnen einer Webseite umfasst, die ein CAPTCHA-Rätsel mit vorgeschlagenen zweiten und/oder weiteren Gesten anzeigt, die von dem einen oder den mehreren Benutzern ausgeführt werden sollen.

6. Verfahren nach einem der vorhergehenden Ansprüche, wobei das Verfahren in dem Kommunikationsschritt ferner umfasst, dass der Notdienst den einen oder die mehreren Benutzer anweist, eine geheime Geste auszuführen, die nur dem oder den verifizierten Benutzer(n) in dem entsprechenden Notfallgebiet bekannt ist.

7. Verfahren nach einem der vorhergehenden Ansprüche, wobei der Schritt des Empfangens auf Anfrage, durch den Notdienst, von Signal- und/oder Standortdaten von einem Netzbetreiber bezüglich des oder der Benutzerendgeräts/e ferner eine vorbestimmte Zeitspanne von 10 Sekunden, vorzugsweise von 5 Sekunden und am bevorzugtesten von 3 Sekunden umfasst.

8. Verfahren nach einem der vorhergehenden Ansprüche, wobei das Verfahren ferner umfasst, dass der Notdienst die erste, zweite oder jede weitere Geste, die von dem einen oder den mehreren Benutzerendgeräten im Notfallgebiet ausgeführt wurde, mit einer Übereinstimmung von mindestens 50 Prozent, vorzugsweise von mindestens 80 Prozent und am bevorzugtesten von mindestens 90 Prozent erkennt.

9. Verfahren nach einem der vorhergehenden Ansprüche, wobei das Verfahren ferner das Einstellen eines vorbestimmten Zeitgeberwerts umfasst, in dem der eine oder die mehreren Benutzer die erste, zweite oder eine weitere Geste ausführen müssen, wobei der vorbestimmte Zeitgeberwert 60 Sekunden, vorzugsweise 20 Sekunden und am bevorzugtesten 10 Sekunden beträgt.

10. Verfahren nach einem der vorhergehenden Ansprüche, wobei die Kommunikation in dem Schritt des Kommunizierens, durch den Notdienst, mit einem oder mehreren Benutzerendgeräten im Notfallgebiet und des Instruierens an den einen oder die mehreren Benutzer, eine zweite oder weitere Geste mit ihrem Endgerät in der Luft auszuführen, die Anweisung an den einen oder die mehreren Benutzer umfasst, eine auszuführende Geste auszuwählen, indem dem Benutzer ein CAPTCHA-Rätsel mit verschiedenen Gesten zur Auswahl präsentiert wird.

11. System zum Aufdecken böswilliger mobiler Aktivitäten durch Nutzung signalbasierter Gesten, wobei das System so konfiguriert ist, dass es das Verfahren nach einem der Ansprüche 1 bis 10 ausführt.

12. System gemäß Anspruch 11, wobei das System einen Bot, eine künstliche Intelligenz, ein Computerprogramm, eine Anwendung und/oder ein Kommunikationsnetzwerk mit einem Link zum Abrufen der angeforderten Daten vom Anbieter umfasst, wobei diese so konfiguriert sind, dass sie den Notdienst bei der Durchführung der Schritte des Verfahrens unterstützen.

**Revendications**

1. Procédé permettant de révéler des activités mobiles malveillantes en exploitant des gestes basés sur des signaux, le procédé comprenant les étapes suivantes:

   - S100 la détection, par un service d'urgence, d'un incident d'urgence dans une zone;
   - S200 la communication, par le service d'urgence, avec un ou plusieurs appareils terminaux d'utilisateurs dans la zone de l'incident et l'instruction d'un ou plusieurs utilisateurs d'effectuer un premier geste dans l'air avec le ou les appareils terminaux d'utilisateur;
   - S300 la réception sur demande, par le service d'urgence, des données de signal et/ou de localisation provenant d'un opérateur concernant le ou les appareils terminaux d'utilisateur pendant une durée prédéterminée;

- S400 l'analyse, par le service d'urgence, du signal et/ou des données de localisation reçus par l'opérateur afin de déterminer si les données de positionnement déduites de l'analyse du signal fournissent suffisamment d'informations pour reconnaître le premier geste effectué par le ou les appareils terminaux d'utilisateur dans la zone de l'incident;

- S500 la communication, par le service d'urgence, avec un ou plusieurs utilisateurs dans la zone de l'incident afin d'effectuer un deuxième geste ou plusieurs gestes supplémentaires en déplaçant le ou les appareils terminaux d'utilisateur dans l'air, si l'analyse du signal ne fournit pas suffisamment d'informations pour reconnaître le premier geste, et la répétition des étapes de réception et d'analyse des données de signal et/ou de localisation concernant le deuxième geste ou tout autre geste supplémentaire;

- S600 la vérification, par les services d'urgence, que le ou les utilisateurs dans la zone de l'incident ne sont pas malveillants et la poursuite de la procédure d'urgence standard, si l'analyse du signal fournit suffisamment d'informations pour reconnaître le premier geste, le deuxième geste ou tout autre geste supplémentaire.

2. Procédé selon la revendication 1, dans lequel la communication dans l'étape consistant à communiquer, par le service d'urgence, avec un ou plusieurs appareils terminaux d'utilisateurs dans la zone de l'incident et à demander à un ou plusieurs utilisateurs d'effectuer le premier geste dans l'air avec leur(s) appareil(s) terminal(aux), comprend un service de messages courts - diffusion cellulaire, CB-SMS, un SMS non interactif et/ou des commandes vocales.

3. Procédé selon l'une des revendications précédentes, dans lequel la communication, dans l'étape consistant à communiquer, par le service d'urgence, avec un ou plusieurs dispositifs terminaux d'utilisateurs dans la zone de l'incident et à demander à un ou plusieurs utilisateurs d'effectuer le deuxième geste ou tout autre geste dans l'air avec leur(s) appareil(s) terminal(aux), comprend un service de messages courts point à point, SMS-PP, un SMS interactif, un canal de données interactif et/ou des commandes vocales.

4. Procédé selon l'une des revendications précédentes, dans lequel les données de signal/localization, dans l'étape de réception sur demande, par le service d'urgence, des données de signal et/ou de localisation provenant d'un opérateur concernant le ou les dispositifs terminaux d'un ou plusieurs utilisateurs, comprennent un signal de référence de sondage, SRS, une différence de temps d'arrivée en liaison montante, UTDOA, une différence de temps observée améliorée, EOTD, une localisation par valeur, LbV, et une localisation mobile avancée, AML.

5. Procédé selon l'une des revendications précédentes, dans lequel la communication comprend également un lien permettant d'ouvrir une page web qui présente un puzzle CAPTCHA avec des suggestions de seconds gestes et/ou d'autres gestes à effectuer par le ou les utilisateur(s).

6. Procédé selon l'une des revendications précédentes, dans lequel, lors de l'étape de communication, le procédé comprend également l'instruction, par le service d'urgence, à l'un ou aux plusieurs utilisateurs d'effectuer un geste secret qui n'est connu que de l'utilisateur ou des utilisateurs authentifié(s) dans la zone correspondante de l'incident d'urgence.

7. Procédé selon l'une des revendications précédentes, dans lequel l'étape consistant à recevoir sur demande, par le service d'urgence, des données de signal et/ou de localisation provenant d'un opérateur concernant le ou les dispositifs terminaux d'un ou plusieurs utilisateurs, comprend également un intervalle de temps prédéterminé de 10 secondes, de préférence de 5 secondes et, de manière encore plus préférable, de 3 secondes.

8. Procédé selon l'une des revendications précédentes, le procédé comprenant également la reconnaissance, par le service d'urgence, du premier, du deuxième ou de tout autre geste qui a été effectué par le ou les dispositifs terminaux d'un ou plusieurs utilisateurs dans la zone de l'incident avec un taux de similitude d'au moins 50 %, de préférence d'au moins 80 % et, de manière encore plus préférable d'au moins 90 %.

9. Procédé selon l'une des revendications précédentes, le procédé comprenant également la définition d'une durée prédéterminée pendant laquelle le ou les utilisateurs doivent effectuer le premier, le deuxième ou tout autre geste, la durée prédéterminée étant de 60 secondes, de préférence de 20 secondes et de manière encore plus préférable de 10 secondes.

10. Procédé selon l'une des revendications précédentes, dans lequel la communication, dans l'étape consistant à communiquer, par le service d'urgence, avec un ou plusieurs dispositifs terminaux d'utilisateur(s) dans la zone de l'incident et à demander à un ou plusieurs utilisateurs d'effectuer un deuxième geste ou tout autre geste supplémentaire avec leur(s) dispositif(s) terminal(aux) dans l'air, comprend la demande à un ou plusieurs utilisateurs de choisir un geste à effectuer en présentant à l'utilisateur un puzzle CAPTCHA avec différents gestes à choisir.

11. Système permettant de détecter les activités mobiles malveillantes en exploitant des gestes basés sur des signaux, le système étant configuré pour exécuter le procédé selon l'une des revendications 1 à 10.

12. Système selon la revendication 11, le système comprenant un bot, une intelligence artificielle, un programme informatique, une application et/ou un réseau de communication avec un lien pour obtenir les données demandées auprès du fournisseur, ceux-ci étant configurés pour aider le service d'urgence à exécuter les étapes du procédé.

```
┌─────────────────────┐
│ S100: Emergency     │
│ incident is deteced │
└──────────┬──────────┘
           │
           ▼
┌─────────────────────┐
│ S200: Emergency     │
│ service communicates│
│ with the user(s) in │
│ the affected area   │
└──────────┬──────────┘
           │
           ▼
┌─────────────────────┐
│ S300: The           │◄──────────────────┐
│ emergency service   │                   │
│ collects signal data│                   │
│ from the carrier    │                   │
└──────────┬──────────┘                   │
           │                              │
           ▼                              │
┌─────────────────────┐                   │
│ S400: The           │                   │
│ emergency service   │                   │
│ analyzes            │                   │
│ signal/location data│                   │
└──────────┬──────────┘                   │
           │                              │
           ▼                              │
        ◇ Sufficient ◇   No    ┌──────────────────────────┐
        ◇  result?   ◇ ──────► │ S500: The emergency      │
           │                   │ service communicates     │
           │                   │ with the user(s) in      │
           │                   │ the affected area to     │
           │                   │ perform a gesture by     │
           │                   │ moving the device in air │
           │                   └──────────────────────────┘
           ▼
┌─────────────────────┐
│ S600: The user(s) is│
│ verified and        │
│ emergency service   │
│ follows usual       │
│ routine             │
└──────────┬──────────┘
           │
           ▼
       ┌───────┐
       │  END  │
       └───────┘
```

**Fig. 1**

```
         ┌──────────┐                                    ┌──────────────┐
         │ Carrier  │                                    │ Call Center 1│
         └──────────┘                                    └──────────────┘
```

**S100:** Call arrives at the
call center from device_k

Emergency service communicates
about the emergency details.
Large scale incident identified

**S200:** The emergency service triggers
CB-SMS by instructing the affected
users to move their devices in the air

**S300:** The emergency service retrieves
Request data          signal data from the network carrier for
devices                the examined devices for the last 120
                       to 180 seconds

Response
from carrier          **S400:** Analyze signal data. Found
                      10 devices which have been moved

Sufficient
result?

Yes

**S600:** The users have been verified and the
emergency service follows the standard handing

# Fig. 2

**Carrier**

**Call Center 1**

**S100:** Abandoned call with location
data generated from the UE detected

Call is abandoned

**S200:** Emergency service requests
from the user to move the device in the air

**S300:** The emergency service retrieves
signal data from the network carrier for
the examined device for the last 120
to 180 seconds

Request data
devices

Response
from carrier

**S400:** Signal data analysis gives different
results from received geolocation data

Sufficient
result?

No

**S500:** The user is requested to perform specific gesture

**S300 (repeated):** The emergency service request data from the carrier

**S400 (repeated):** Signal data analysis detects a circle and a triangle

**S500 (repeated):** the user receives an SMS
with a link that directs to a CAPTCHA.
The user is requested to verify with a specified gesture
or the user performs a secret gesture identifying the user as
an authorized person in this geolocation

Verify the
secret gesture

**S600:** The emergency service is followed in the standard way

# Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **QI, C. R.** ; **SU, H.** ; **MO, K.** ; **GUIBAS, L. J.** Pointnet: Deep learning on point sets for 3d classification and segmentation. *In Proceedings of the IEEE conference on computer vision and pattern recognition*, 2017, 652-660, https://arxiv.org/pdf/1612.00593.pdf